# EUROPEAN PATENT SPECIFICATION

(11) **EP 3 449 552 B1**
(45) Date of publication and mention of the grant of the patent: **25.02.2026**
(21) Application number: 17727697.9
(22) Date of filing: 19.04.2017
(51) Int. Cl.: H02K 3/24, H02K 9/22

(54) **COOLING DEVICE FOR ELECTRIC MACHINES**
KÜHLVORRICHTUNG FÜR ELEKTRISCHE MASCHINEN
DISPOSITIF DE REFROIDISSEMENT POUR MACHINES ÉLECTRIQUES

(30) Priority: 28.04.2016 IT UB20162987
(43) Date of publication of application: 06.03.2019
(73) Proprietor: Politecnico di Torino, 10129 Torino (IT)
(72) Inventor: GUGLIELMI, Paolo, 10129 Torino (IT); PICCOLI, Giovanni, 10139 Torino (IT); DIANA, Michela, 10139 Torino (IT)
(74) Representative: Ferroni, Filippo
(86) International application number: PCT/IB2017/052225
(87) International publication number: WO 2017/187296

(56) References cited:
- EP-A1- 2 985 885
- EP-A2- 1 276 205
- WO-A1-97/45914
- DE-A1- 102012 217 778
- US-A1- 2005 057 106

## Description

The present invention relates to a cooling device for electric machines, in particular a device for cooling coils of an electric machine for drive and/or generation applications.

As is known, electric machines for traction and/or generation applications, such as, for example, a permanent-magnet synchronous motor/generator, have a power-to-weight ratio the upper limit of which essentially depends on the losses by Joule effect occurring in the stator windings of the machine; as a matter of fact, these windings tend to generate heat while the machine is in operation because of the electric current flowing therein. This heat causes an increase in the temperature of the conductors that form the windings, and hence also of the insulators that separate them from one another. The temperature limit of these insulators is much lower than the highest temperature that can be withstood by almost all the other elements of the electric machine. De *facto,* this limitation leads to a limited power output of a given structure.

The increased conductor temperature results in increased resistivity of the conductors, which, the applied voltage and/or the undergone magnetic flux variation being equal, will allow the passage of current having lower intensity, thus limiting the maximum power output of small electric machines, while in bigger machines there will be greater losses that will limit their efficiency.

In order to preserve the high performance of an electric machine, both in terms of efficiency and in terms of torque and power density, in some applications (such as, for example, traction applications) it becomes necessary to cool some parts of said machine, e.g. by blowing air into the air gap of the machine and/or by providing the stator with cooling fins and/or by coupling the stator thermally to an external cooling system (see the solution described in the publication of US patent application No. US 2005/057106 A1 to BALLARD POWER SYSTEMS CORPORATION), such as, for example, a liquid or gas cooling system or the like. This often makes it difficult to install the electric machine in sealed compartments (e.g. the compartment that houses the motor of an electric car) or in positions having predefined dimensions (e.g. the central body of a bicycle frame), because when designing the machine (and the other components) it is also necessary to take into account the thermal load (thermal power) that will need to be dissipated when said machine is in operation. This problem becomes particularly complex in applications on means of transport, where the available space is small and where it is also necessary to take into account the safety of the users of the vehicle and/or of service personnel, so that it is not possible, for example, to put the chassis of the vehicle in direct thermal communication with the motor.

In fact, if the motor power is increased without increasing the section of the winding conductors, it is absolutely necessary to be able to dissipate the greater heat produced by said conductors when a high electric current is flowing therethrough, in order to keep the winding temperature under a certain threshold even when the electric machine reaches a high level of (generated or produced) power only for a short period of time; otherwise, as aforesaid, those elements which are subject to the most stringent thermal limitation, i.e. the windings, but also the permanent magnets, might be damaged and jeopardize the integrity of the electric machine.

For this reason, the size of the stator becomes particularly important, since it must be sufficiently big to allow heat dissipation. By way of example, when the machine has the stator positioned inside the rotor (as is typical in outrunner-type permanent-magnet synchronous motors), this problem becomes especially important, because the stator has an extremely small surface available for thermal exchange.

U.S. Patent Application Publication No. US 2005/057106 A1 to BALLARD POWER SYSTEMS CORPORATION discloses an electric machine with cooling elements inserted between the stator windings. These elements are described as solid bars made of an electrically insulating and thermally conducting material. While this solution provides a degree of cooling by thermal conduction, it does not incorporate an internal duct for the circulation of a refrigerating fluid, which limits its maximum heat dissipation capacity, especially in high-power density applications.

German patent application No. DE 10 2012 217 778 A1 to SCHAEFFLER TECHNOLOGIES GMBH discloses an electric machine comprising a liquid cooling system having ducts for circulating cooling fluids, wherein said ducts are entirely made of copper, resulting that, during the operation of this machine, galvanic currents are induced in the cooling fluid. This clearly reduces the reliability of the machine due to accelerated corrosion of the cooling system.

European Patent Application Publication No. EP 2 985 885 A1 to HAMILTON SUNDSTRAND CORP discloses another cooling arrangement for an electric machine, in particular a stator assembly wherein the stator housing itself includes integrated cooling channels for the circulation of a coolant. These cooling channels are integral to the stator housing and are not configured as separate, individual bodies inserted directly into the cavities between the stator windings, in intimate thermal contact with said windings. This peripheral cooling method results in a less direct and therefore potentially less efficient thermal path for heat removal from the windings, which are the primary source of heat generation.

As previously mentioned, in fact, a temperature increase implies, the power output being equal, an efficiency reduction that translates, in a vehicular application, into reduced vehicle mileage.

The present invention aims at solving these and other problems by providing a cooling device for a winding of an electric machine for drive and/or generation applications as disclosed in appended independent claim 1.

The basic idea of the present invention is to put a cooling device (e.g. a heat exchanger) in a condition of thermal exchange (as direct as possible) with the conductors of a winding of an electric machine for traction and/or generation applications. To do so without impairing the performance of the electric machine, the cooling device is made of a material having a higher thermal conductivity than the material of the stator of the electric machine, an extremely high electric resistivity (an electric insulator), so as to not induce any losses due to parasitic currents, considering the large magnetic field variation to which it is subjected, and, finally, a very low magnetic permeability, so as to not substantially alter the inductance of the winding with which said device is in thermal exchange.

In substance, the material should have a high thermal conductivity, a very low electric conductivity, a very low magnetic permeability and also, preferably, some mechanical strength, with thermal expansion coefficients similar to those of the surrounding materials, in order to prevent mechanical separation during high cooling or heating periods.

In this manner, a great amount of heat can be transferred without it being dissipated in the stator, and without altering the electric characteristics of the winding, i.e. without significantly changing the inductance value of the coil. In fact, an increased inductance value, which may be produced, for example, by the presence of a heat exchanger made of ferromagnetic material in contact with the conductors that make up the winding, would imply a reduction in the maximum power output of the electric machine because of reduced intensity of the magnetic field in the air gap or increased electromotive force generated by the winding, thus making it necessary to use a bigger power supply device, i.e. a device capable of outputting a higher quantity of Volt-amperes.

Further advantageous features of the present invention will be set out in the appended dependent claims 2-15

These features as well as further advantages of the present invention will become more apparent from the following description of an embodiment thereof as shown in the annexed drawings, which are supplied by way of non-limiting example, wherein:
Figs. 1 and 2 are perspective views of a stator of an electric machine comprising a plurality of cooling devices according to the invention;
Fig. 3 is a side view of the stator shown in Figures 1 and 2;
Fig. 4 is a sectional view of the stator along the axis B - B of Fig. 3;
Fig. 5 is a perspective view of one possible embodiment of the cooling device according to the invention;
Fig. 6 is a sectional view along the axis C - C of the cooling device according to the invention;
Fig. 7 is a sectional view of a portion of an electric machine comprising the stator shown in Figures 1 and 2, highlighting the thermal flows generated between the stator and the cooling device according to the invention;
Fig. 8 is a sectional view of a portion of an electric machine comprising the stator shown in Figures 1 and 2, highlighting a part of the magnetic fluxes circulating in the stator, in the air gap and in the rotor when the electric machine is in an operating condition.

Any reference to "an embodiment" in this description will indicate that a particular configuration, structure or feature is comprised in at least one embodiment of the invention. Therefore, the phrase "in an embodiment" and other similar phrases, which may be present in different parts of this description, will not necessarily be all related to the same embodiment. Furthermore, any particular configuration, structure or feature may be combined in one or more embodiments as deemed appropriate. The references below are therefore used only for simplicity's sake and do not limit the protection scope or extent of the various embodiments.

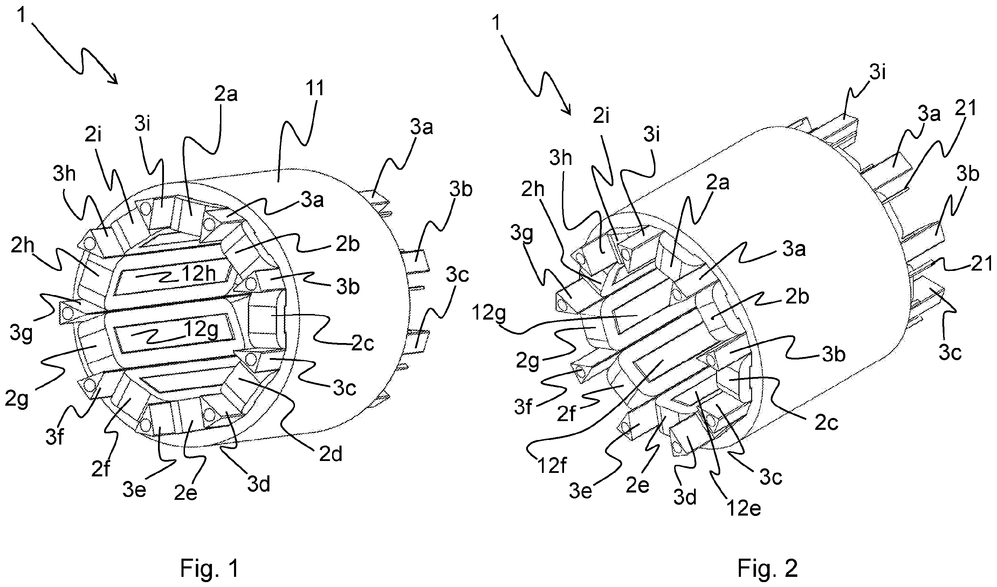

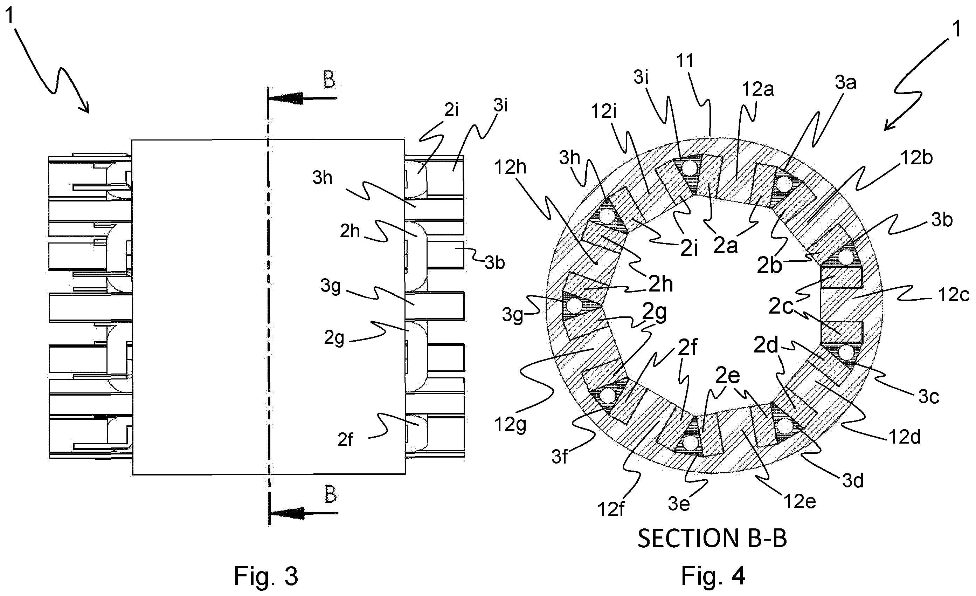

With reference to Figures 1, 2, 3 and 4, the following will describe a stator 1 of an electric machine preferably similar to the electric machine (not equipped with a cooling device) described in P. Guglielmi, M. Diana, G. Piccoli and V. Cirimele, "Multi-n-phase electric drives for traction applications", Electric Vehicle Conference (IEVC), 2014 IEEE International, Florence, 2014, pp. 1-6, doi: 10.1109/IEVC.2014.7056231.

The stator 1 preferably comprises the following parts:
- a hollow main portion 11 having an elongated shape and a preferably cylindrical cross-section (but it may also be rectangular or have any other shape), made of ferromagnetic material, so that the magnetic field lines advantageously gather within said portion 11 without scattering in the surrounding environment;
- a plurality of support teeth 12a-12i having an elongated shape, which are substantially oriented along the main direction of development of the main portion 11, and which protrude from the main portion 11 towards the inside of said main portion 11.

Each support tooth 12a-12i is adapted to support a winding 2a-2i consisting of wound conductive material (e.g. copper alloy, aluminium alloy, or the like) having a surface coated with a layer of insulating material having a thickness of a few tens of microns (i.e. conductive wire subjected to the so-called enamelling process), so as to create an inductance that, when current is supplied thereto, can generate a magnetic field with lines extending inside the stator 1 (where the rotor is present in operating conditions) and reclosing along the main portion 11. The peculiarity of the structure illustrated in the annexed drawings is that power is supplied to a rotor provided with a number of electric poles equal to 8 or 10, thereby producing harmonic variations that are advantageously lower than those of traditional electric machines having similar shapes.

If the tooth 12a-12i has a rectangular cross-section (as shown in the annexed drawings), the winding 2a-2i may preferably be prepared outside the stator and then engaged around said tooth 12a-12i. If the tooth has a parallelepiped cross-section (or another shape) that prevents the insertion of a winding prepared beforehand, the winding may be wound directly around the tooth, e.g. by using a winding machine. The solution proposed herein leans towards the former solution, thus considerably simplifying the process of assembling the entire electric machine.

Once the windings 2a-2i have been engaged around the respective teeth 12a-12i, it can be noticed that between two successive windings an empty space is formed which is a part of the air gap (also known as cavity).

Into each cavity, at least one cooling device 3a-3i is inserted, which will now be described in detail.

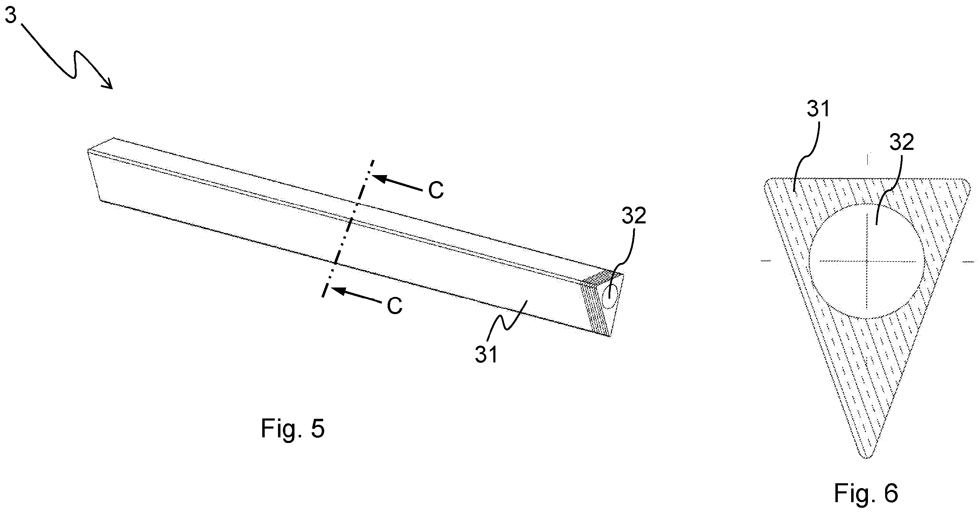

Also with reference to Figures 5 and 6, the cooling device 3 comprises the following parts:
- a body 31 made of a material having high thermal conductivity and high electric resistivity;
- a duct 32 for the passage of a refrigerating fluid, e.g. water, a solution of water and ethylene glycol, a solution of water and alcohol, a refrigerating gas, or the like.

More in detail, the body 31 can be put in thermal exchange with said at least one winding 2a-2i; for this purpose, said body is made of a material having greater thermal conductivity than the material of the main portion 11 of the stator 1, and sufficient electric resistivity and magnetic permeability to not substantially alter the inductance of the winding with which said body 31 is in direct thermal exchange.

The duct 32 is put in fluidic communication with refrigerating means (not shown in the annexed drawings), which are adapted to dissipate into the environment the heat gained by the body 31 of the device 3; such refrigerating means may comprise, for example, a pump and a heat radiator according to the prior art.

The material of the body 31 of the cooling device 3 may advantageously have a high resistance to corrosion, i.e. a value of resistance to corrosion of less than 1 milligram per square decimetre per day ( mg/(dm² · *gg*))*.* This allows the use of refrigerating fluids having a strong corrosive action (such as, for example, fluids containing non-deionized water or the like), but a high thermal capacity, which makes them suitable for use as refrigerating fluids. It is thus possible to lower the temperature of the windings 2a-2i under a certain temperature threshold, resulting in increased efficiency and/or utilization of the electric machine.

The cooling device 3 has a shape which is compatible with that of the cavity, i.e. preferably an elongated shape having a cross-section shaped as an isosceles triangle with rounded angles. It must be pointed out that when the teeth have a rectangular or parallelepiped shape, in fact, the resulting shape of the cross-section of the cavity will be similar to an isosceles triangle, whereas the shape of the cavity will be different when using differently shaped teeth and/or a differently shaped main portion 11 of the stator 1. Therefore, the man skilled in the art will be able to shape the cooling device of the invention as necessary to adapt it at best to the shape of the cavity, without however departing from the teachings of the present invention.

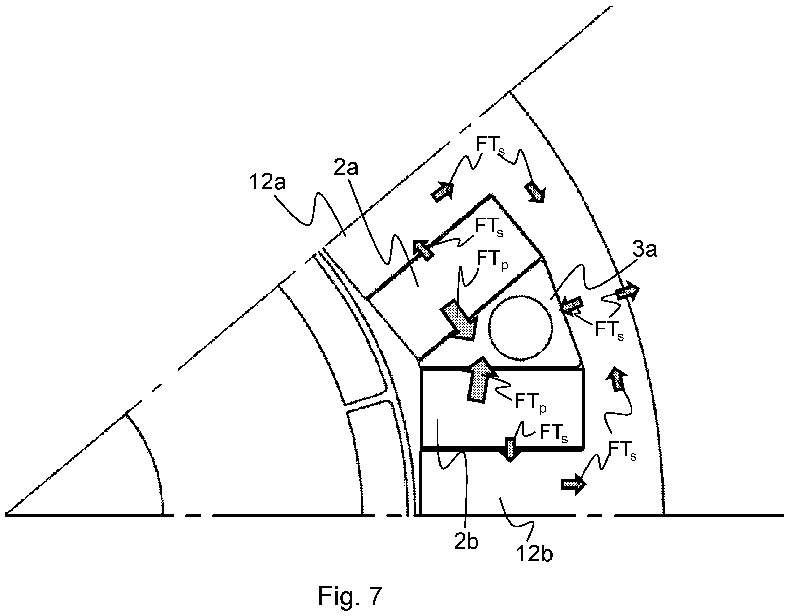

Also with reference to Fig. 7, the body of the cooling device 3 is made of a material having high thermal conductivity, i.e. having a thermal conductivity preferably greater than 100 W/(m·K) at a temperature of 21 Celsius degrees, so as to generate a main thermal flow FTₚ that will remove as much heat as possible from the windings 2a-2i, outwards from the machine, without heating up the stator 1. This is possible because the main thermal flow FTₚ reduces the amount of heat dissipated through a secondary thermal flow FTₛ from the windings 2a-2i towards the stator 1. In this manner, the performance of the machine will remain constant even when the machine is absorbing or generating, or has just absorbed or generated, current peaks, because the heat will be dissipated towards the device 3, as opposed to the stator 1. Moreover, the high thermal conductivity will prevent any non-dissipated heat from damaging the thin insulating material covering the conductors, thereby avoiding that the functionality of the machine might suffer from sudden degradation and extending the life of said machine.

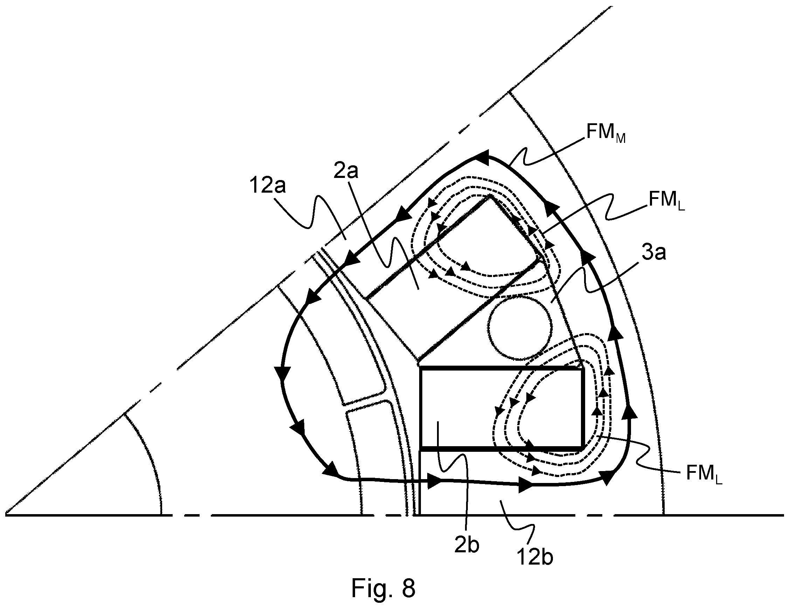

Also with reference to Fig. 8, the following will describe the variable magnetic fluxes (i.e. magnetic fluxes that are not generated by the permanent magnets or by the stator windings) that are generated inside the stator 1 when the electric machine is in an operating condition; in fact, the electromagnetic environment in which the cooling device 3 is located is particularly hostile, since at least two types of magnetic fields are present therein:
- a motor magnetic field FM_{M}, which, as it exits through a support tooth 12 to cross the air gap 13 (twice) and the rotor, and then entering the stator again through another tooth 12 to re-close in the portion 11 of the stator 1, induces a drive torque on the rotor shaft;
- a loss magnetic field FM_{L}, which, as it crosses the cooling device 3 and re-closes without crossing the air gap, does not generate any drive torque on the rotor shaft.

In order to advantageously reduce the average intensity of the loss magnetic flux FML, the device 3 is preferably made of a non-ferromagnetic material, because the adoption of a ferromagnetic material (which is typically also a quite good thermal conductor) would lead to an increase in the field lines that, since such lines would not cross the air gap, would result in increased inductance of the machine and a worse power factor thereof, i.e. the average intensity of said loss magnetic field FM_{L} would disadvantageously increase.

Furthermore, the presence of a device 3 made of a material having high electric conductivity (usually along with high thermal conductivity) would cause problems related to increased losses of the electric machine; in fact, the presence of variable magnetic flux lines within the area occupied by the cooling device 3 would lead to the generation of parasitic currents, and hence to increased losses in the iron, resulting in a less efficient machine.

For this reason, the material of said cooling device 3 also has a high electric resistivity, i.e. an electric resistivity higher than 1.0 Ωm.

As an alternative to the above, it must be pointed out that a loss magnetic field FM_{L} can be reduced (shielded) by using a material having a very low electric resistance, such as copper or the like.

For the purpose of making the device 3 easier to manufacture, such device may be made by using a plurality of different materials; for example, the body 31 of the cooling device 3 may be made of a conductive material (e.g. copper) coated with a material having high resistivity and low magnetic permeability (e.g. alumina or silicon carbide), which is normally more valuable (and hence more expensive). In this way, the performance and efficiency of the electric machine can be improved without using large quantities of valuable materials.

As aforementioned, the cooling device 3 is preferably at least partly made of di-aluminium trioxide (also known as alumina), silicon carbide, or another material characterized by high thermal conductivity, low magnetic permeability and high electric resistivity.

The use of a material having high electric resistivity for making the cooling device 3 simplifies also the process of installation of said device 3, because it allows the latter to be inserted into the stator of said device when the windings 2a-2i have already been engaged with the teeth 12a-12i without altering the performance of the electric machine. As a matter of fact, while inserting the device 3 into the electric machine the thin layer of insulating material that covers the winding conductor may be damaged/removed by the rubbing action generated as the device 3 slides in the cavity; however, this effect does not affect the performance of the electric machine, since the material employed creates no current flow between two points of the conductor where the insulating layer has been removed, thus ensuring that the inductance value of the winding will remain substantially unchanged.

Moreover, the material used for making said cooling device 3 may also have a high dielectric rigidity, i.e. a dielectric rigidity higher than 1 MV/m. Advantageously, this allows supplying higher voltages to the windings 2a-2i than in prior-art solutions, without the formation of electric arcs from the conductor towards the cooling device 3a-3i and/or the stator 1. The power-to-weight ratio is thus advantageously increased, along with the efficiency of the system comprising the electric machine and its power electronics. In fact, the weight of an inverter is strongly affected by the maximum manageable current value, whereas the maximum managed voltage value affects the weight of said inverter to a much lesser extent.

Furthermore, the cooling device 3 may also comprise an electronic power circuit in thermal exchange with said cooling device 3, wherein said electronic power circuit is preferably adapted to supply power to the windings 2a-2i. In fact, the cooling device 3 is made of a material having high thermal conductivity, high electric resistivity and high dielectric rigidity, which is ideal for housing power electronics, because the latter needs cooling and electric insulation due to the high voltages that may develop when regulating high supply voltages. It is thus possible to integrate the power electronics necessary for controlling the operation of an electric machine directly into the stator volume by exploiting the spaces of the cavities, so that the power-to-weight ratio of the electric machine and its power electronics can advantageously be increased, resulting in higher efficiency. An additional advantage offered by this solution is a reduction in the parasitic currents that typically affect both the electric machine and its speed regulator (also known as converter). In fact, the voltage waveform typically supplied to a variable-speed electric machine is a width-modulated square wave that provides, on average, the desired electric voltage across the machine terminals. This is especially done in order to strongly reduce the losses inside the converter. Said voltage waveform greatly stimulates all the parasitic capacities that are present in the electric machine, in particular those between the coils (2a-2i) and the ferromagnetic core (11). This is caused by the fact that the electronic converter is located outside the electric machine and is connected to the same electric reference as the stator of the electric machine, so as to meet the functionality and electric safety requirements, according to which the external parts of all electric machines and converters thereof must always at the same electric potential of a maintenance person.

The above-described arrangement of the converter (i.e. the power electronics) inside the electric machine allows reducing the stimulation, by the converter itself, of the parasitic capacities due to the geometry of said stator, because the electric circuit branches to which power is supplied are reduced, thereby decreasing the electric capacities of the circuit to which power is supplied by said converter. The most important advantage of this solution is the substantial elimination (or very strong reduction) of all conducted and irradiated electromagnetic disturbances that are typical of applications with electronic power converters and electric machines; besides, such a solution also allows improving the efficiency of the electric machine, since it allows increasing the power factor of said electric machine.

Of course, the example described so far may be subject to many variations.

In particular, it must be pointed out that the cooling device according to the invention may be used not only for cooling the windings of an electric motor and/or generator, but also for cooling windings of transformers, inverters or other power circuits, wherever it is necessary to prevent the winding conductor from overheating and causing a degradation in the performance of the circuit.

## Claims

1. Cooling device (3) for an electric machine that includes a stator (1) and at least one winding (2a-2i) coupled to said stator (1), comprising a body (31) that is put in thermal exchange with said at least one winding (2a-2i), wherein said body (31) is at least partially made of a material having greater thermal conductivity than the material of the stator (1),
**characterised in that**
said body (31) comprises therewithin a duct (32) for the passage of a refrigerating fluid, wherein said duct is put in fluidic communication with refrigerating means, and wherein the body (31) of the cooling device (3) is made of a thermal conductive material coated with a non-ferromagnetic material having high electric resistivity, so as to avoid substantially alteration of the inductance of the winding with which said body (31) is in thermal exchange.

2. Device (3) according to claim 1, wherein the material used for making at least a part of the body (31) has an electric resistivity higher than 1.0 Ω·m.

3. Device (3) according to claim 1 or 2, wherein the material used for making at least a part of the body (31) has a thermal conductivity higher than 100 W/(m·K).

4. Device (3) according to any one of claims 1 to 3, wherein the material used for making at least a part of the body (31) has a high resistance to corrosion with a value. of less than 1 milligram per square decimetre per day.

5. Device (3) according to any one of claims 1 to 4, comprising an electronic power circuit in thermal exchange with the body (31) of said device (3).

6. Device (3) according to claim 5 , wherein the electronic power circuit is adapted to supply power to said at least one winding (2a-2i).

7. Device (3) according to claim 5 or 6, wherein the material used for making at least a part of the body (31) has a dielectric rigidity higher than 1 MV/m.

8. Device (3) according to any one of claims 1 to 7, wherein the material used for making at least a part of the body (31) is aluminium trioxide and/or silicon carbide.

9. Device (3) according to any one of claims 1 to 8, wherein the body (31) comprises
- an external part, which is put in thermal exchange with said at least one winding (2a-2i), and which is made of a material having greater thermal conductivity than the material of the stator (1) and sufficient electric resistivity and magnetic permeability to not substantially alter the inductance of the winding with which said body (31) is in thermal exchange, and
- an internal part, made of a material which is different from that of said external part.

10. Device (3) according to claim , wherein the external part of said body (31) is made of aluminium trioxide and/or silicon carbide.

11. Device (3) according to any one of claims 1 to 10 wherein the body (31) has an elongated shape and a cross-section which is compatible with the cross-section of a cavity within said stator (1), defined by at least said stator (1) and said at least one winding (2a-2i).

12. Electric machine comprising a device (3) according to any one of claims 1 to 11 and at least one winding (2a-2i) coupled to said stator (1), wherein said device (3) is at least partly positioned inside said machine, in thermal exchange with said at least one winding (2a-2i).

13. Electric machine according to claim 12 **characterized in that** it is an electric motor.

14. Electric machine according to claim 12 or 13, **characterized in that** it is an electric generator.

15. Electric machine according to claim 12 **characterized in that** it is an electric transformer.

## Patentansprüche

1. Kühlvorrichtung (3) für eine elektrische Maschine, die einen Stator (1) und mindestens eine mit diesem Stator (1) verbundene Wicklung (2a - 2i) umfasst , mit einem Körper (31), der mit der mindestens einen Wicklung (2a - 2i) in Wärmeaustausch steht, wobei der Körper (31) zumindest teilweise aus einem Material mit einer höheren Wärmeleitfähigkeit als das Material des Stators (1) besteht,
**dadurch gekennzeichnet, dass**
der Körper (31) in seinem Inneren einen Kanal (32) für den Durchfluss eines Kühlfluids umfasst, wobei der Kanal in Fluidverbindung mit einer Kühleinrichtung steht, und wobei der Körper (31) der Kühlvorrichtung (3) aus einem wärmeleitenden Material besteht, das mit einem nichtferromagnetischen Material mit hoher elektrischer Widerstandsfähigkeit beschichtet ist, um eine wesentliche Veränderung der Induktivität der Wicklung, mit der der Körper (31) in Wärmeaustausch steht, zu vermeiden.

2. Vorrichtung (3) nach Anspruch 1, wobei das zur Herstellung zumindest eines Teils des Körpers (31) verwendete Material einen elektrischen spezifischen Widerstand von mehr als 1,0 Ω·m aufweist.

3. Vorrichtung (3) nach Anspruch 1 oder 2, wobei das zur Herstellung mindestens eines Teils des Körpers (31) verwendete Material eine Wärmeleitfähigkeit von mehr als 100 W / (m·K) aufweist.

4. Vorrichtung (3) nach einem der Ansprüche 1 bis 3, wobei das zur Herstellung zumindest eines Teils des Körpers (31) verwendete Material eine hohe Korrosionsbeständigkeit mit einem Wert von weniger als 1 Milligramm pro Quadratdezimeter pro Tag aufweist.

5. Vorrichtung (3) nach einem der Ansprüche 1 bis 4, umfassend eine elektronische Leistungsschaltung, die in Wärmeaustausch mit dem Körper (31) der Vorrichtung (3) steht.

6. Vorrichtung (3) nach Anspruch 5, wobei die elektronische Leistungsschaltung dazu ausgelegt ist, die mindestens eine Wicklung (2a - 2i) mit Strom zu versorgen.

7. Vorrichtung (3) gemäß Anspruch 5 oder 6, wobei das zur Herstellung zumindest eines Teils des Körpers (31) verwendete Material eine dielektrische Festigkeit von mehr als 1 MV/m aufweist.

8. Vorrichtung (3) nach einem der Ansprüche 1 bis 7, wobei das zur Herstellung zumindest eines Teils des Körpers (31) verwendete Material Aluminiumtrioxid und/oder Siliziumkarbid ist.

9. Vorrichtung (3) nach einem der Ansprüche 1 bis 8, wobei der Körper (31) umfasst
- einen äußeren Teil, der in Wärmeaustausch mit der mindestens einen Wicklung (2a - 2i) steht und aus einem Material besteht, das eine größere Wärmeleitfähigkeit als das Material des Stators (1) und eine ausreichende elektrische Widerstandsfähigkeit und magnetische Permeabilität aufweist, um die Induktivität der Wicklung, mit der der Körper (31) in Wärmeaustausch steht, nicht wesentlich zu verändern, und
- einen inneren Teil, der aus einem Material besteht, das sich von dem des äußeren Teils unterscheidet.

10. Vorrichtung (3) nach Anspruch 9, wobei der äußere Teil des Körpers (31) aus Aluminiumtrioxid und/oder Siliziumkarbid besteht.

11. Vorrichtung (3) nach einem der Ansprüche 1 bis 10, wobei der Körper (31) eine längliche Form und einen Querschnitt aufweist, der mit dem Querschnitt eines Hohlraums innerhalb des Stators (1) kompatibel ist, der durch mindestens den Stator (1) und mindestens eine Wicklung (2a - 2i) definiert ist.

12. Elektrische Maschine, umfassend eine Vorrichtung (3) gemäß einem der Ansprüche 1 bis 11 und mindestens eine mit dem Stator (1) gekoppelte Wicklung (2a - 2i), wobei die Vorrichtung (3) zumindest teilweise innerhalb der Maschine positioniert ist und in Wärmeaustausch mit der mindestens einen Wicklung (2a - 2i) steht.

13. Elektrische Maschine nach Anspruch 12, **dadurch gekennzeichnet, dass** es sich um einen Elektromotor handelt.

14. Elektrische Maschine nach Anspruch 12 oder 13, **dadurch gekennzeichnet, dass** es sich um einen elektrischen Generator handelt.

15. Elektrische Maschine nach Anspruch 12, **dadurch gekennzeichnet, dass** es sich um einen elektrischen Transformator handelt.

## Revendications

1. - Dispositif de refroidissement (3) pour une machine électrique qui comprend un stator (1) et au moins un enroulement (2a-2i) couplé audit stator (1), comprenant un corps (31) qui est mis en échange thermique avec ledit au moins un enroulement (2a-2i), ledit corps (31) étant au moins partiellement fait d'un matériau ayant une plus grande conductivité thermique que le matériau du stator (1),
**caractérisé par le fait que**
ledit corps (31) comprend à l'intérieur de celui-ci un conduit (32) pour le passage d'un fluide réfrigérant, ledit conduit étant mis en communication fluidique avec des moyens de réfrigération, et le corps (31) du dispositif de refroidissement (3) étant fait d'un matériau thermoconducteur revêtu d'un matériau non ferromagnétique à haute résistivité électrique, de manière à éviter une altération substantielle de l'inductance de l'enroulement avec lequel ledit corps (31) est en échange thermique.

2. - Dispositif (3) selon la revendication 1, dans lequel le matériau utilisé pour réaliser au moins une partie du corps (31) a une résistivité électrique supérieure à 1,0 Ω·m.

3. - Dispositif (3) selon la revendication 1 ou 2, dans lequel le matériau utilisé pour réaliser au moins une partie du corps (31) a une conductivité thermique supérieure à 100 W/(m·K).

4. - Dispositif (3) selon l'une quelconque des revendications 1 à 3, dans lequel le matériau utilisé pour réaliser au moins une partie du corps (31) a une résistance élevée à la corrosion avec une valeur inférieure à 1 milligramme par décimètre carré par jour.

5. - Dispositif (3) selon l'une quelconque des revendications 1 à 4, comprenant un circuit de puissance électronique en échange thermique avec le corps (31) dudit dispositif (3).

6. - Dispositif (3) selon la revendication 5, dans lequel le circuit de puissance électronique est apte à fournir de l'énergie audit au moins un enroulement (2a-2i).

7. - Dispositif (3) selon la revendication 5 ou 6, dans lequel le matériau utilisé pour réaliser au moins une partie du corps (31) a une rigidité diélectrique supérieure à 1 MV/m.

8. - Dispositif (3) selon l'une quelconque des revendications 1 à 7, dans lequel le matériau utilisé pour réaliser au moins une partie du corps (31) est du trioxyde d'aluminium et/ou du carbure de silicium.

9. - Dispositif (3) selon l'une quelconque des revendications 1 à 8, dans lequel le corps (31) comprend
- une partie externe, qui est mise en échange thermique avec ledit au moins un enroulement (2a-2i), et qui est faite d'un matériau ayant une conductivité thermique supérieure à celle du matériau du stator (1) et une résistivité électrique suffisante et une perméabilité magnétique suffisante pour ne pas altérer de façon substantielle l'inductance de l'enroulement avec lequel ledit corps (31) est en échange thermique ; et
- une partie interne, faite d'un matériau qui est différent de celui de ladite partie externe.

10. - Dispositif (3) selon la revendication 9, dans lequel la partie externe dudit corps (31) est faite de trioxyde d'aluminium et/ou de carbure de silicium.

11. - Dispositif (3) selon l'une quelconque des revendications 1 à 10, dans lequel le corps (31) a une forme allongée et une section transversale qui est compatible avec la section transversale d'une cavité à l'intérieur dudit stator (1), définie par au moins ledit stator (1) et ledit au moins un enroulement (2a-2i).

12. - Machine électrique comprenant un dispositif (3) selon l'une quelconque des revendications 1 à 11 et au moins un enroulement (2a-2i) couplé audit stator (1), dans laquelle ledit dispositif (3) est au moins partiellement positionné à l'intérieur de ladite machine, en échange thermique avec ledit au moins un enroulement (2a-2i).

13. - Machine électrique selon la revendication 12, **caractérisée par le fait qu'**il s'agit d'un moteur électrique.

14. - Machine électrique selon la revendication 12 ou 13, **caractérisée par le fait qu'**il s'agit d'un générateur électrique.

15. - Machine électrique selon la revendication 12, **caractérisée par le fait qu'**il s'agit d'un transformateur électrique.
